# EUROPEAN PATENT APPLICATION

(11) **EP 3 564 027 A1**
(43) Date of publication of application: **06.11.2019**
(21) Application number: 18170204.4
(22) Date of filing: 30.04.2018
(51) Int. Cl.: B32B 7/02, B32B 27/08, B32B 27/36, B29C 33/68, B32B 27/28, B32B 27/30, B32B 27/32, B32B 27/34, B29C 64/245

(54) **BUILD SHEET FOR ADDITIVE MANUFACTURING**

(71) Applicant: SABIC Global Technologies B.V., 4612 PX Bergen op Zoom (NL)
(72) Inventor: PARIMAL, Kumar, Mt. Vernon, IN 47620 (US); TADROS, Safwat E., Evansville, IN Indiana 47720 (US)
(74) Representative: Elzaburu S.L.P.

(57) **Abstract**

A build sheet for use in an additive manufacturing process includes a polycarbonate copolymer. The polycarbonate copolymer has a glass transition temperature (T_{g}) of from 160-230 °C. A multilayer sheet includes at least a first layer and a second layer, in which the first layer and the second layer are coextruded or melt-laminated, at least one of the first layer and the second layer include a polycarbonate copolymer having a T_{g} of from 160-230 °C, and the first layer and the second layer have a different composition. A method of making a multilayer sheet includes coextruding or melt laminating at least a first layer and a second layer into the multilayer sheet. At least one of the first layer and the second layer include a polycarbonate copolymer having a T_{g} of from 160-230 °C, and the first layer and the second layer have a different composition.

## Description

### FIELD OF THE DISCLOSURE

The present disclosure relates to build sheets for use in additive manufacturing processes, and in particular to build sheets including polycarbonate copolymer having a high glass transition temperature.

### BACKGROUND OF THE DISCLOSURE

In additive manufacturing a print head and nozzle applies an additive manufacturing material onto a print bed in a series of successive layers to build a three-dimensional part. A build sheet is sometimes laid onto the print bed to facilitate removal of the printed part from the print bed. Particular build sheets currently in use include acrylonitrile butadiene styrene (ABS) and polyetherimide (PEI) thermoplastic sheets. The additive manufacturing material is applied onto the build sheet, which should (1) be formed of a material that can withstand the temperature of the printed material and/or the print chamber in which the part is printed and (2) adhere to and support the first layer (or first few layers) of the printed part to the build sheet and print bed. Adhesion of the printed part to the build sheet keeps the printed part in place on the print bed, which improves printing performance. Conventional build sheet materials lack one or both of these features.

These and other shortcomings are addressed by aspects of the present disclosure.

### SUMMARY

Aspects of the disclosure relate to a build sheet for use in an additive manufacturing process including a polycarbonate copolymer. The polycarbonate copolymer has a glass transition temperature (T_{g}) of from 160 °C to 230 °C.

Aspects of the disclosure further relate to a multilayer sheet including at least a first layer and a second layer. The first layer and the second layer are coextruded or melt-laminated, at least one of the first layer and the second layer include a polycarbonate copolymer having a T_{g} of from 160 °C to 230 °C, and the first layer and the second layer have a different composition. In some aspects the multilayer sheet is used as a build sheet in an additive manufacturing process.

Yet further aspects of the disclosure relate to a method of making a multilayer sheet, the method including coextruding or melt laminating at least a first layer and a second layer into the multilayer sheet. At least one of the first layer and the second layer include a polycarbonate copolymer having a T_{g} of from 160 °C to 230 °C, and the first layer and the second layer have a different composition.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.
FIG. 1 is a top perspective view of a build sheet for use in an additive manufacturing process according to an aspect of the disclosure.
FIG. 2 is a top perspective view of a build sheet for use in an additive manufacturing process according to an aspect of the disclosure.
FIG. 3 is a top perspective view of a build sheet for use in an additive manufacturing process according to an aspect of the disclosure.
FIG. 4 is a top perspective view of a multilayer sheet according to an aspect of the disclosure.
FIG. 5 is a top perspective view of a multilayer sheet according to an aspect of the disclosure.
FIG. 6 is a side view of an apparatus for additive manufacturing of a part including the build sheet according to aspects of the disclosure.

### DETAILED DESCRIPTION

The present disclosure can be understood more readily by reference to the following detailed description of the disclosure and the Examples included therein. In various aspects, the present disclosure relates to a build sheet for use in an additive manufacturing process including a polycarbonate copolymer. The polycarbonate copolymer has a glass transition temperature (T_{g}) of from 160 °C to 230 °C, or in some aspects at least 195 °C. Further aspects of the disclosure relate to a multilayer sheet including at least a first layer and a second layer. The first layer and the second layer are coextruded or melt-laminated, at least one of the first layer and the second layer include a polycarbonate copolymer having a T_{g} of from 160 °C to 230 °C, or in some aspects at least 195 °C; and the first layer and the second layer have a different composition.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a foam material" includes mixtures of two or more foam materials.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Apparatus for Additive Manufacturing

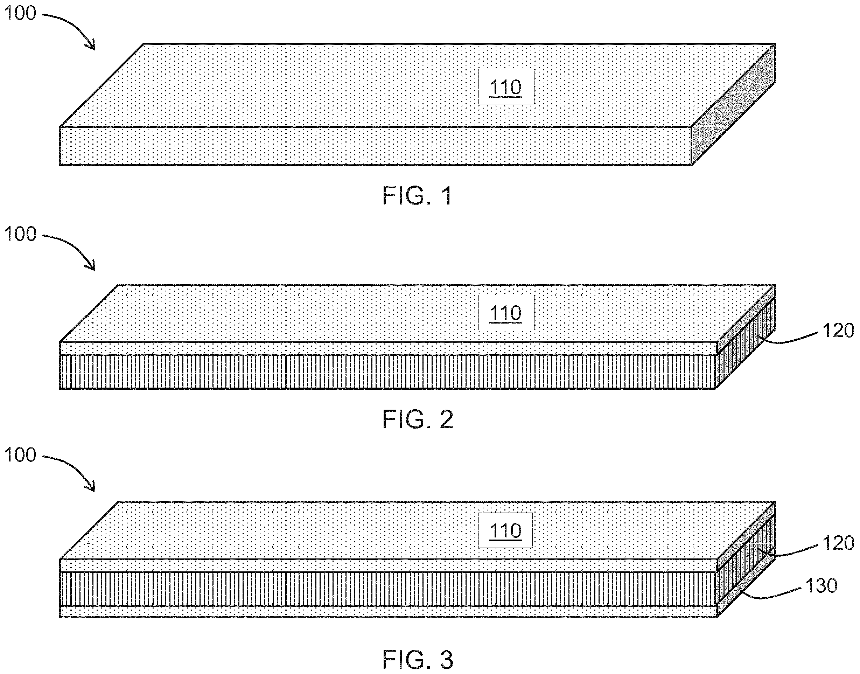

With reference to FIGS. 1-3, aspects of the disclosure relate to a build sheet 100 for use in an additive manufacturing process. The build sheet 100 includes a polycarbonate copolymer that has 150.

In certain aspects the polycarbonate copolymer in the build sheet 100 includes a bisphenol-A (BPA) monomer and a 2-phenyl-3,3'- bis (4-hydroxy phenyl) phthalimidine (PPPBP) monomer. Purely exemplary polycarbonate copolymers suitable for use in aspects of the disclosure include, but are not limited to, Lexan™ XHT polycarbonate copolymers, available from SABIC.

In some aspects the ratio of PPPBP to BPA in the polycarbonate copolymer is from 10:90 to 70:30. In particular aspects the polycarbonate copolymer has a molecular weight (MW) of from 17,000 to 80,000.

The polycarbonate copolymer may be endcapped with any conventional endcapping agents, which can be used provided that such agents do not significantly adversely impact the desired properties of the polycarbonate copolymer (heat stability and/or adhesion to the printed part, for example). Endcapping agents include, but are not limited to, mono-phenolic compounds, mono-carboxylic acid chlorides, and/or mono-chloroformates. Mono-phenolic endcapping agents are exemplified by monocyclic phenols such as phenol and C1-C22 alkyl-substituted phenols such as p-cumyl-phenol, resorcinol monobenzoate, and p- and tertiary-butyl phenol; and monoethers of diphenols, such as p-methoxyphenol.

As used herein, the terms "BPA" and "bisphenol A," which can be used interchangeably, refer to a compound having a structure represented by the formula: 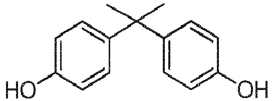 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

The build sheet 100 could include one layer, as shown in FIG. 1 as a first layer 110. The build sheet 100 may include one or more layers. With specific reference to FIGS. 2 and 3, in some aspects the build sheet includes a second layer 120, a third layer 130, or even more than 3 layers (not shown). It should be noted that although the figures show the first layer 110 as being the top layer of the build sheet 100 with the second layer 120 being the bottom or middle layer of the build sheet 100, the "first layer," "second layer," "third layer" and any subsequent layers can be located in the build sheet in any order.

At least one of the layers includes the polycarbonate copolymer. In some aspects two or more of the layers, or even all of the layers, include the polycarbonate copolymer. Any layer (or layers) of the build sheet 100 could include other polymers, including but not limited to polyetherimide (PEI) (e.g., ULTEM™, available from SABIC), polycarbonate (PC), polyethylene terephthalate (PET), polyphenylsulfone (PPSU), polyphenylene sulfide (PPS), polyether ether ketone (PEEK), polyimide (e.g., EXTEM™, available from SABIC), poly(ether sulfone) (PES), poly(p-phenylene oxide) (PPO), PPO blends (e.g., PPO and polystyrene (PS)), polysulfone (PSU), polyaryletherketone (PAEK), blends thereof, and combinations thereof. Other exemplary suitable polymers include, but are not limited to, acrylonitrile butadiene styrene (ABS), polybutylene terephthalate (PBT), PBT blends including PC/PBT blends, high density polyethylene (HDPE), poly(phenylene oxide) (PPO), acrylic-styrene-acrylonitrile (ASA), polyamides, polypropylene (PP), polylactic acid (PLA), blends thereof, and combinations thereof.

Additional materials may be incorporated into the one or more layers of the build sheet 100 to enhance the properties of the layer(s) and/or to provide the layer(s) with additional properties. Purely by way of example, filler materials such as carbon fibers, glass fibers, ceramic fibers, milled fibers or minerals may be incorporated into the build sheet 100 to improve the strength and thermal stability of the build sheet 100. In some aspects the one or more layers of the build sheet 100 are in the form of a film. In other aspects the one or more layers of the build sheet 100 are in the form of a foam. In further aspects in which the build sheet 100 includes a plurality of layers at least one of the layers is in the form of a film and at least another of the layers is in the form of a foam.

In some aspects the build sheet 100 includes at least a first layer 110 and a second layer 120, and the first layer 110 and the second layer 120 have a different composition. As used herein, "different composition" means that the first layer 110 and the second layer 120 either have different materials (e.g., they do not include identical components such as the polycarbonate copolymer in the first layer 110 and a blend of PEI and the polycarbonate copolymer in the second layer 120) or different amounts of the same material (e.g., both the first layer 110 and the second layer 120 can include the same components such as the polycarbonate copolymer and PEI, but the layers have different amounts of these components).

In a particular aspect the first layer 110 includes the polycarbonate copolymer and the second layer 120 includes PEI.

In some aspects the first layer 110 includes the polycarbonate copolymer and has a thickness that is from 3% to 97% of the thickness of the second layer 120, which includes PEI (with or without the polycarbonate copolymer). In certain aspects a ratio of thickness of the first layer 110 including the polycarbonate copolymer to the second layer 120 including PEI (with or without the polycarbonate copolymer) is from 4:1 to 9:1. In particular aspects the first layer 110 includes the polycarbonate copolymer and has a thickness of from 400 micron (µm) to 450 µm and the second layer 120 includes PEI (with or without the polycarbonate copolymer) and has a thickness of from 50 µm to 100 µm. Such aspects in which the thicker layer includes the polycarbonate copolymer may be desirable because the polycarbonate copolymer is much less expensive than PEI, so the overall build sheet 100 will be less expensive than a build sheet that includes only PEI.

In some aspects the build sheet 100 has a thickness of from 75 µm to 1300 µm.

In certain aspects the build sheet 100 has a polished/smooth surface. In other aspects the build sheet 100 has a matte surface. The surface of the build sheet 100 may be modified in order to provide a desired level of adhesion between the build sheet 100 and the part printed thereon.

When the build sheet 100 includes two or more layers (e.g., a first layer 110 and a second layer 120), the layers may be coextruded or melt-laminated according to conventional methods. An adhesive may be used as necessary to promote adhesion between the layers of the build sheet. Melt lamination includes, but is not limited to, in-mold lamination, thermal lamination and pressure lamination.

In certain aspects the build sheet is reusable. As used herein, "reusable" means that the build sheet 100 is suitable for use in more than one additive manufacturing operation, such as from 2 to 15 or more times. The high thermal stability of the build sheet 100 prevents or minimizes warping and/or deformation of the build sheet 100, which contributes to its reusability. One factor affecting the reusability of the build sheet 100 is the amount of available space left over on the build sheet after each successive printing of a part on the build sheet 100.

### Multilayer sheet including a polycarbonate copolymer

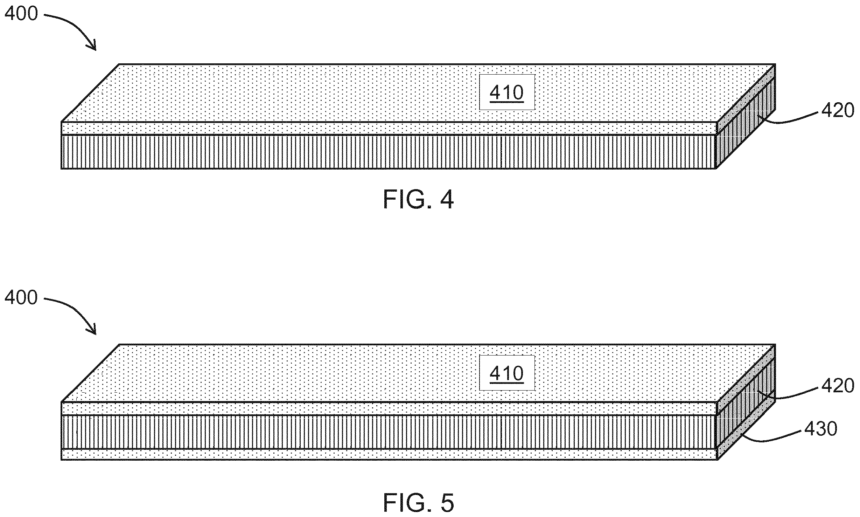

With reference to FIGS. 4 and 5, aspects of the disclosure further relate to a multilayer sheet 400 including at least a first layer 410 and a second layer 420. The first layer 410 and the second layer 420 are coextruded or melt-laminated, at least one of the first layer 410 and the second layer 420 include a polycarbonate copolymer, and the first layer 410 and the second layer 420 have a different composition. The polycarbonate copolymer has a T_{g} of from 160 degrees Celsius (°C) to 230 °C. In some aspects the polycarbonate copolymer has a T_{g} of at least 195 °C. In particular aspects the polycarbonate copolymer has a T_{g} of from 180 °C to 230 °C, or a T_{g} of from 190 °C to 230 °C, or a T_{g} of from 195 °C to 230 °C

In certain aspects the polycarbonate copolymer in the multilayer sheet 400 includes a bisphenol-A (BPA) monomer and a 2-phenyl-3,3'- bis (4-hydroxy phenyl) phthalimidine (PPPBP) monomer. Purely exemplary polycarbonate copolymers suitable for use in aspects of the disclosure include, but are not limited to, Lexan™ XHT polycarbonate copolymers, available from SABIC. In some aspects the ratio of PPPBP to BPA in the polycarbonate copolymer is from 10:90 to 70:30. In particular aspects the polycarbonate copolymer has a molecular weight (MW) of from 17,000 to 80,000. The polycarbonate copolymer may be endcapped with any conventional endcapping agents such as but not limited to those described herein.

It should be noted that although the figures show the first layer 410 as being the top layer of the multilayer sheet 400 with the second layer 420 being the bottom or middle layer of the multilayer sheet 400, the "first layer," "second layer," "third layer" and any subsequent layers can be located in the multilayer sheet in any order.

At least one of the layers includes the polycarbonate copolymer. In some aspects two or more of the layers, or even all of the layers, include the polycarbonate copolymer. Any layer (or layers) of the multilayer sheet 400 could include other polymers, polyetherimide (PEI) (e.g., ULTEM™, available from SABIC), polycarbonate (PC), polyethylene terephthalate (PET), polyphenylsulfone (PPSU), polyphenylene sulfide (PPS), polyether ether ketone (PEEK), polyimide (e.g., EXTEM™, available from SABIC), poly(ether sulfone) (PES), poly(p-phenylene oxide) (PPO), PPO blends (e.g., PPO and polystyrene (PS)), polysulfone (PSU), polyaryletherketone (PAEK), blends thereof, and combinations thereof. Other exemplary suitable polymers include, but are not limited to, acrylonitrile butadiene styrene (ABS), polybutylene terephthalate (PBT), PBT blends including PC/PBT blends, high density polyethylene (HDPE), poly(phenylene oxide) (PPO), acrylic-styrene-acrylonitrile (ASA), polyamides, polypropylene (PP), polylactic acid (PLA), blends thereof, and combinations thereof.

Additional materials may be incorporated into one or more of the layers of the multilayer sheet 400 to enhance the properties of the layer(s) and/or to provide the layer(s) with additional properties. Purely by way of example, filler materials such as carbon fibers, glass fibers, ceramic fibers, milled fibers or minerals may be incorporated into the multilayer sheet 400 to improve the strength and thermal stability of the multilayer sheet 400. In some aspects one or more of the layers of the multilayer sheet 400 are in the form of a film. In other aspects one or more of the layers of the multilayer sheet 400 are in the form of a foam. In further aspects at least one of the layers is in the form of a film and at least another of the layers is in the form of a foam.

In a particular aspect the first layer 410 includes the polycarbonate copolymer and the second layer 420 includes PEI.

In some aspects the first layer 410 includes the polycarbonate copolymer and has a thickness that is from 3% to 97% of the thickness of the second layer 420, which includes PEI (with or without the polycarbonate copolymer). In certain aspects a ratio of thickness of the first layer 410 including the polycarbonate copolymer to the second layer 420 including PEI (with or without the polycarbonate copolymer) is from 4:1 to 9:1. In particular aspects the first layer 410 includes the polycarbonate copolymer and has a thickness of from 400 micron (µm) to 450 µm and the second layer 420 includes PEI (with or without the polycarbonate copolymer) and has a thickness of from 50 µm to 100 µm.

In some aspects the multilayer sheet 400 has a thickness of from 75 µm to 1300 µm.

The layers of the multilayer sheet 400 may be coextruded or melt-laminated according to conventional methods. An adhesive may be used as necessary to promote adhesion between the layers of the multilayer sheet. Melt lamination includes, but is not limited to, in-mold lamination, thermal lamination and pressure lamination.

In some aspects the multilayer sheet 400 may be used as a build sheet in an additive manufacturing process, including but not limited to consumer desktop additive manufacturing applications, commercial and industrial additive manufacturing applications, and large format additive manufacturing (LFAM) applications (such as but not limited to extrusion additive manufacturing applications and fused filament fabrication applications). In particular aspects the multilayer sheet is reusable.

In some aspects the multilayer sheet 400 includes at least a third layer 430. The multilayer sheet may include more than three layers, such as but not limited to four, five, six or more layers.

### Methods for Making a Multilayer Sheet

Aspects of the disclosure further related to methods of making a multilayer sheet 400, the method including coextruding or melt laminating at least a first layer 410 and a second layer 420 into the multilayer sheet 400. At least one of the first layer 410 and the second layer 420 include a polycarbonate copolymer having a T_{g} of from 160 °C to 230 °C, and the first layer 410 and the second layer 420 have a different composition. In some aspects the polycarbonate copolymer has a T_{g} of at least 195 °C. In particular aspects the polycarbonate copolymer has a T_{g} of from 180 °C to 230 °C, or a T_{g} of from 190 °C to 230 °C, or a T_{g} of from 195 °C to 230 °C

The layers of the multilayer sheet 400 may be coextruded or melt-laminated according to conventional methods. An adhesive may be used as necessary to promote adhesion between the layers of the multilayer sheet. Melt lamination includes, but is not limited to, in-mold lamination, thermal lamination and pressure lamination.

The multilayer sheet 400 may include any of the components or structure of the build sheet 100/multilayer sheet 400 described above.

### Apparatus for Additive Manufacturing

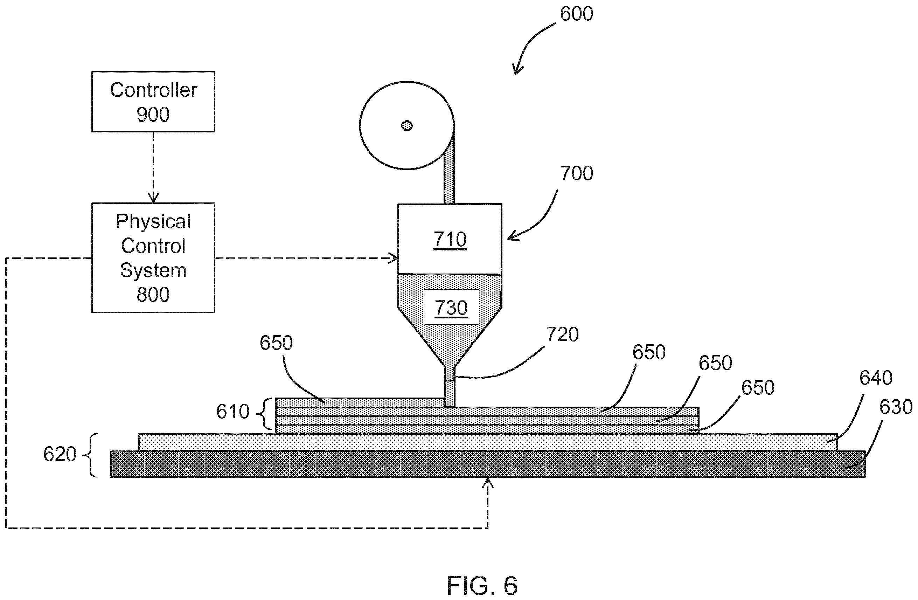

With reference to FIG. 6, aspects of the disclosure relate to an apparatus 600 for additive manufacturing of a part 610, the apparatus 600 including a print bed 620, a print head/nozzle system 700, and a physical control system 800 providing for relative motion between the print head/nozzle system 700 and the print bed 620.

The print bed 620 includes a support table 630 and a build sheet 640. The support table 630 underlies the build sheet 640 and provides support thereto. The support table 630 may be stationary or movable, as discussed in further detail below.

The build sheet 640 includes a polycarbonate copolymer having a T_{g} of from 160 °C to 230 °C. In some aspects the polycarbonate copolymer has a T_{g} of at least 195 °C. In particular aspects the polycarbonate copolymer has a T_{g} of from 180 °C to 230 °C, or a T_{g} of from 190 °C to 230 °C, or a T_{g} of from 195 °C to 230 °C.

The build sheet 640 may include any of the components or structure of the build sheet 100/multilayer sheet 400 described above.

The print head/nozzle system 700 includes at least one print head 710 and nozzle 720. The print head/nozzle system 700 may be stationary or moveable, as discussed in further detail below. An additive manufacturing material 730 may be loaded into the print head 710. Suitable additive manufacturing materials 730 include, but are not limited to, thermoplastic polymers such as but not limited to polyetherimide (PEI) (e.g., ULTEM™, available from SABIC), polycarbonate (PC), polyethylene terephthalate (PET), polyphenylsulfone (PPSU), polyphenylene sulfide (PPS), polyether ether ketone (PEEK), polyimide (e.g., EXTEM™, available from SABIC), poly(ether sulfone) (PES), poly(p-phenylene oxide) (PPO), PPO blends (e.g., PPO and polystyrene (PS)), polysulfone (PSU), polyaryletherketone (PAEK), blends thereof, and combinations thereof. Other exemplary suitable additive manufacturing materials 730 include, but are not limited to, acrylonitrile butadiene styrene (ABS), polybutylene terephthalate (PBT), PBT blends including PC/PBT blends, high density polyethylene (HDPE), poly(phenylene oxide) (PPO), acrylic-styrene-acrylonitrile (ASA), polyamides, polypropylene (PP), polylactic acid (PLA), blends thereof, and combinations thereof.

Additional materials may be incorporated into the thermoplastic polymer to enhance the properties of the thermoplastic polymer and/or to provide the additive manufacturing material 730 with additional properties. Purely by way of example, filler materials such as carbon fibers, glass fibers, ceramic fibers, milled fibers or minerals may be incorporated into the thermoplastic polymer to improve the strength and thermal stability of the additive manufacturing material 730.

The additive manufacturing material 730 may be heated and applied onto the print bed 620 in a plurality of layers 650 to form the printed part 610.

Aspects of the apparatus 600 include a physical control system 800 providing for relative motion between the print head/nozzle system 700 and the print bed 620. In some aspects the physical control system 800 may be a system, including but not limited to a gear system, a hydraulic system, an electric system, or other suitable system for moving the print head/nozzle system 700 while keeping the support table 630 stationary to achieve relative motion between the support table 630 and the print head/nozzle system 700. In other aspects the physical control system 800 may be a system, including but not limited to a gear system, a hydraulic system, an electric system, or other suitable system for moving the support table 630 while keeping the print head/nozzle system 700 stationary to achieve relative motion between the support table 630 and the print head/nozzle system 700. As discussed herein, motion refers to a three-dimensional coordinate system having an X-axis, Y-axis and Z-axis that are all perpendicular to one another, and relative motion refers to both horizontal motion along both the X-axis and Y-axis (perpendicular to the print head/nozzle system 700) and vertical motion along the Z-axis (parallel to the print head/nozzle system 700). The printed part 610 is typically printed in a horizontal plane defined by the X-axis and Y-axis (parallel to the support table 630), but it need not be printed in this manner - it could, for example, be printed at an angle relative to the support table 630.

A controller 900 receives computer-readable instructions for printing the part 610. The computer-readable instructions may be generated by a computer system, and may include, e.g., schematics, diagrams, specifications or other data that would allow the additive manufacturing system to form the printed part 610. The computer-readable instructions may include standard information that is known in the art, and in some aspects are provided as a three-dimensional (3D) computer-aided design (CAD) stereolithography (STL) file format or two-dimensional (2D) CAD file which may be converted into an STL file format. The controller 900 operates the physical control system 800 to print the part 610 in accordance with the computer-readable instructions.

The apparatus 600 may be used in any additive manufacturing application, including consumer desktop additive manufacturing applications, commercial and industrial additive manufacturing applications, and large format additive manufacturing (LFAM) applications (such as but not limited to extrusion additive manufacturing applications and fused filament fabrication applications).

### Aspects

It should be appreciated that the present disclosure can include any one up to all of the following aspects:
Aspect 1. A build sheet for use in an additive manufacturing process comprising a polycarbonate copolymer, wherein the polycarbonate copolymer has a glass transition temperature (T_{g}) of from 160 °C to 230 °C.
Aspect 1A. The build sheet according to Aspect 1, wherein the polycarbonate copolymer has a T_{g} of greater than 195 °C, or from 195 °C to 230 °C.
Aspect 2. The build sheet according to Aspect 1 or 1A, wherein the polycarbonate copolymer comprises bisphenol-A (BPA) monomer and 2-phenyl-3,3'- bis (4-hydroxy phenyl) phthalimidine (PPPBP) monomer.
Aspect 3. The build sheet according to Aspect 2, wherein a ratio of PPPBP to BPA in the polycarbonate copolymer is from 10:90 to 70:30.
Aspect 4. The build sheet according to any of Aspects 1 to 3, wherein the polycarbonate copolymer has a molecular weight (MW) of from 17,000 to 80,000.
Aspect 5. The build sheet according to any of Aspects 1 to 4, wherein the polycarbonate copolymer is endcapped.
Aspect 6. The build sheet according to any of Aspects 1 to 5, wherein the build sheet comprises one or more layers, and each of the one or more layers comprise the polycarbonate copolymer.
Aspect 7. The build sheet according to any of Aspects 1 to 5, wherein the build sheet comprises at least a first layer and a second layer, wherein the first layer and the second layer have a different composition.
Aspect 8. The build sheet according to Aspect 7, wherein the second layer comprises polyetherimide.
Aspect 9. The build sheet according to Aspects 7 or 8, wherein a ratio of thickness of the first layer to the second layer is from 4:1 to 9:1.
Aspect 10. The build sheet according to any of Aspects 7 to 9, wherein the first layer and the second layer are coextruded or melt-laminated.
Aspect 11. The build sheet according to any of Aspects 1 to 10, wherein the build sheet has a thickness of from 75 µm to 1300 µm.
Aspect 12. The build sheet according to any of Aspects 1 to 11, wherein the build sheet is reusable.
Aspect 13. A multilayer sheet comprising at least a first layer and a second layer, wherein:
   the first layer and the second layer are coextruded or melt-laminated;
   at least one of the first layer and the second layer comprise a polycarbonate copolymer having a T_{g} of from 160 °C to 230 °C; and
   the first layer and the second layer have a different composition.
Aspect 13A. The multilayer sheet according to Aspect 1, wherein the polycarbonate copolymer has a T_{g} of greater than 195 °C, or from 195 °C to 230 °C.
Aspect 14. The multilayer sheet according to Aspect 13 or 13A, wherein the polycarbonate copolymer comprises bisphenol-A (BPA) monomer and 2-phenyl-3,3'- bis (4-hydroxy phenyl) phthalimidine (PPPBP) monomer.
Aspect 15. The multilayer sheet according to Aspect 14, wherein a ratio of PPPBP to BPA in the polycarbonate copolymer is from 10:90 to 70:30.
Aspect 16. The multilayer sheet according to any of Aspects 13 to 15, wherein the polycarbonate copolymer has a molecular weight (MW) of from 17,000 to 80,000.
Aspect 17. The multilayer sheet according to any of Aspects 13 to 16, wherein the polycarbonate copolymer is endcapped.
Aspect 18. The multilayer sheet according to any of Aspects 13 to 17, wherein the first layer comprises the polycarbonate copolymer and the second layer comprises polyetherimide.
Aspect 19. The multilayer sheet according to Aspect 18, wherein a ratio of thickness of the first layer to the second layer is from 4:1 to 9:1.
Aspect 20. The multilayer sheet according to any of Aspects 13 to 19, wherein the multilayer sheet has a thickness of from 75 µm to 1300 µm.
Aspect 21. The multilayer sheet according to any of Aspects 13 to 20, wherein the multilayer sheet is used as a build sheet in an additive manufacturing process.
Aspect 22. The multilayer sheet according to any of Aspects 13 to 21, wherein the multilayer sheet is reusable.
Aspect 23. The multilayer sheet according to any of Aspects 13 to 22, wherein the multilayer sheet comprises at least a third layer.
Aspect 24. A method of making a multilayer sheet, the method comprising coextruding or melt laminating at least a first layer and a second layer into the multilayer sheet, wherein:
   at least one of the first layer and the second layer comprise a polycarbonate copolymer having a T_{g} of from 160 °C to 230 °C; and
   the first layer and the second layer have a different composition.
Aspect 24A. The build sheet according to Aspect 24, wherein the polycarbonate copolymer has a T_{g} of greater than 195 °C, or from 195 °C to 230 °C.
Aspect 25. The method according to Aspect 24 or 24A, wherein the polycarbonate copolymer comprises bisphenol-A (BPA) monomer and 2-phenyl-3,3'- bis (4-hydroxy phenyl) phthalimidine (PPPBP) monomer.
Aspect 26. The method according to Aspect 25, wherein a ratio of PPPBP to BPA in the polycarbonate copolymer is from 10:90 to 70:30.
Aspect 27. The method according to any of Aspects 24 to 26, wherein the polycarbonate copolymer has a molecular weight (MW) of from 17,000 to 80,000.
Aspect 28. The method according to any of Aspects 24 to 27, wherein the polycarbonate copolymer is endcapped.
Aspect 29. The method according to any of Aspects 24 to 28, wherein the first layer comprises the polycarbonate copolymer and the second layer comprises polyetherimide.
Aspect 30. The method according to Aspect 29, wherein a ratio of thickness of the first layer to the second layer is from 4:1 to 9:1.
Aspect 31. The method according to any of Aspects 24 to 30, wherein the multilayer sheet has a thickness of from 75 µm to 1300 µm.
Aspect 32. The method according to any of Aspects 24 to 31, wherein the multilayer sheet is used as a build sheet in an additive manufacturing process.
Aspect 33. The method according to any of Aspects 24 to 32, wherein the multilayer sheet is reusable.
Aspect 34. The method according to any of Aspects 24 to 33, further comprising coextruding or melt laminating at least a third layer into the multilayer sheet.

Each of these non-limiting aspects can stand on its own, or can be combined in various permutations or combinations with one or more of the other aspects.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

A sheet including 100% of the polycarbonate copolymer described herein (Lexan™ XHT polycarbonate copolymer) was formed and used as a build sheet in an additive manufacturing process. Additive manufacturing materials including polycarbonate and a blend of polycarbonate and PEI were printed onto the build sheet. The build sheet had good thermal stability (i.e., it did not melt, warp or deform) and the build sheet was reusable. A build sheet with a polished surface was found to have better adhesion to the printed part than a matte surface.

In contrast, conventional build sheets including PEI, or PEI and polycarbonate deformed on the support table under similar conditions and were not reusable.

The above detailed description includes references to the accompanying drawings, which form a part of the detailed description. The drawings show, by way of illustration, specific aspects in which the disclosure can be practiced. These aspects are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or nonvolatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A build sheet for use in an additive manufacturing process comprising a polycarbonate copolymer, wherein the polycarbonate copolymer has a glass transition temperature (T_{g}) of from 160 degrees Celsius (°C) to 230 °C.

2. The build sheet according to claim 1, wherein the polycarbonate copolymer comprises bisphenol-A (BPA) monomer and 2-phenyl-3,3'- bis (4-hydroxy phenyl) phthalimidine (PPPBP) monomer.

3. The build sheet according to claim 2, wherein a ratio of PPPBP to BPA in the polycarbonate copolymer is from 10:90 to 70:30.

4. The build sheet according to any of claims 1 to 3, wherein the polycarbonate copolymer has a molecular weight (MW) of from 17,000 to 80,000.

5. The build sheet according to any of claims 1 to 4, wherein the polycarbonate copolymer is endcapped.

6. The build sheet according to any of claims 1 to 5, wherein the build sheet comprises one or more layers, and each of the one or more layers comprise the polycarbonate copolymer.

7. The build sheet according to any of claims 1 to 5, wherein the build sheet comprises at least a first layer and a second layer, wherein the first layer and the second layer have a different composition.

8. The build sheet according to claim 7, wherein the second layer comprises polyetherimide.

9. The build sheet according to claims 7 or 8, wherein a ratio of thickness of the first layer to the second layer is from 4:1 to 9:1.

10. The build sheet according to any of claims 7 to 9, wherein the first layer and the second layer are coextruded or melt-laminated.

11. The build sheet according to any of claims 1 to 10, wherein the build sheet has a thickness of from 75 µm to 1300 µm.

12. The build sheet according to any of claims 1 to 11, wherein the build sheet is reusable.

13. A multilayer sheet comprising at least a first layer and a second layer, wherein:
the first layer and the second layer are coextruded or melt-laminated;
at least one of the first layer and the second layer comprise a polycarbonate copolymer having a T_{g} of from 160 °C to 230 °C; and
the first layer and the second layer have a different composition.

14. The multilayer sheet according to claim 13, wherein the multilayer sheet is used as a build sheet in an additive manufacturing process.

15. A method of making a multilayer sheet, the method comprising coextruding or melt laminating at least a first layer and a second layer into the multilayer sheet, wherein:
at least one of the first layer and the second layer comprise a polycarbonate copolymer having a T_{g} of from 160 °C to 230 °C; and
the first layer and the second layer have a different composition.
